# EUROPÄISCHE PATENTANMELDUNG

(11) **EP 4 501 764 A1**
(43) Veröffentlichungstag der Anmeldung: **05.02.2025**
(21) Anmeldenummer: 24192424.0
(22) Anmeldetag: 01.08.2024
(51) Int. Cl.: B62J 6/029, B62J 11/10, B62J 45/413, B62J 45/422, B62K 19/32, B62K 19/40

(54) **BELEUCHTUNGSEINRICHTUNG FÜR FAHRRÄDER UND ANDERE LEV'S, SCHEINWERFER HIERFÜR UND FAHRZEUGE HIERMIT**

(30) Priorität: 03.08.2023 DE 202023104415 U
(71) Anmelder: ZEG Zweirad-Einkaufs-Genossenschaft eG, 50739 Köln (DE)
(72) Erfinder: Gehring, Hendrik, 51429 Bergisch Gladbach (DE)
(74) Vertreter: Patentanwälte Buschhoff Hennicke Althaus

(57) **Zusammenfassung**

Die Erfindung betrifft eine Beleuchtungseinrichtung für einspurige Fahrzeuge, die einen drehbar gelagerten Gabelschaft 205, einen ein Gehäuse 115 und mehrere LED's aufweisenden Frontscheinwerfer 111 sowie wenigstens eine Sensoreinrichtung 260 und eine Steuereinheit für die LEDS umfassen. Um die Funktionalität in der Kurvenfahrt zu verbessern, ist im Gehäuse wenigstens eine LED als zentrale Leuchteinheit 112 angeordnet, und jeweils wenigstens eine weitere LED als seitliche Leuchteinheit 114 seitlich und/oder höhen-versetzt zu der zentralen Leuchteinheit 112 angeordnet, wobei mittels Sensoreinrichtung und Steuereinheit die Drehlage des Gabelschafts 5 abtastbar und in Abhängigkeit von der Drehlage die zentrale Leuchteinheit 112 und wenigstens eine seitliche Leuchteinheiten 114 ansteuerbar ist. Die Erfindung betrifft auch das Fahrzeug und einen Scheinwerfer.

## Beschreibung

Die Erfindung betrifft eine Beleuchtungseinrichtung für Fahrräder und andere elektrische Leichtbaufahrzeuge (Light Electric Vehicles (LEV's)), die einen innerhalb eines Steuerrohrs drehbar gelagerten Gabelschaft zur Übertragung einer Lenkbewegung auf ein Vorderrad, einen ein Gehäuse mit Frontfläche, die vorzugsweise zumindest partiell gekrümmt ist, und mehrere entlang der Frontfläche verteilt angeordnete LEDs als Leuchtmittel aufweisenden Frontscheinwerfer sowie wenigstens eine Sensoreinrichtung und eine Steuereinheit für die LEDS umfasst. Die Erfindung betrifft auch einen Scheinwerfer für eine solche Beleuchtungseinrichtung, mit einem Gehäuse, mit einer lichtdurchlässigen Frontfläche, die vorzugsweise zumindest partiell gekrümmt ist, und mit mehreren entlang der Frontfläche verteilt angeordnete LEDs als Leuchtmittel. Schließlich betrifft die Erfindung auch Fahrzeuge, die mit einer entsprechenden Beleuchtungseinrichtung bzw. einem solchen Scheinwerfer ausgestattet sind bzw. hierfür besonders adaptiert sind.

Beleuchtungseinrichtungen für Fahrräder wie insbesondere Elektrofahrräder müssen für den Straßenverkehr zugelassen sein. Dies gilt auch für Scheinwerfer von Fahrrädern und Elektrofahrrädern. Während Beleuchtungseinrichtungen einschließlich Scheinwerfer für entsprechende Leichtfahrzeuge lange mit herkömmlichen Glühbirnen oder Halogenbirnen versehen waren, sind nahezu sämtliche Beleuchtungseinrichtungen und Scheinwerfer neuerer Bauart mit LEDs als Leuchtmittel ausgestattet. Die Lichtausbeute entsprechender Beleuchtungseinrichtungen und Scheinwerfer ist entsprechend höher, wodurch die Verkehrssicherheit insbesondere für den Nutzer des Fahrrades gestiegen ist.

Ein Problem der neueren Scheinwerfer mit hoher Lichtausbeute ist das Risiko, dass entgegenkommende Fahrzeuge auch durch Scheinwerfer von Fahrrädern geblendet werden können. Zugleich besteht insbesondere bei Fahrrädern weiterhin der Wunsch nach einer diebstahlsicheren und bei Stürzen gegen Beschädigung (besser) geschützten Anbringung des Scheinwerfers am Fahrrad bzw. Fahrradrahmen, und auch der Wunsch nach einer besseren Ausleuchtung der Fahrtstrecke bei Kurvenfahrt, weil ein einspuriges Fahrzeug wie ein Fahrrad bei einer über die Lenkbewegung des Gabelschaftes eingeleiteten Richtungsänderung für eine sichere Kurvenfahrt zum Kurvenmittelpunkt hin gekippt wird, um den Fliehkräften entgegenzuwirken.

Eine mitlenkende Beleuchtungseinrichtung für einspurige Fahrzeuge wie Fahrräder ist aus der DE 10 2019 123 312 B3 bekannt. Das dort beschriebene System kann mit zahlreichen klassisch gebauten Scheinwerfern verwendet werden und besteht aus einer zwischen der Scheinwerferhalterung und dem Scheinwerfer zwischengeschalteten Haltevorrichtung mit speziellen Anschlussgeometrien, um die Kurvenfahrt durch Schwenkbewegungen der Haltevorrichtung auszugleichen.

Eine sturzsichere bzw. besser gegen Beschädigungen geschützte Befestigung von Scheinwerfern am Fahrradrahmen lässt sich dadurch erzielen, dass der Scheinwerfer in den Rahmen integriert wird. Ein niederländischer Hersteller integriert hierzu den Scheinwerfer, und auch das Rücklicht, in ein horizontal ausgerichtetes, das Oberrohr nach vorne und nach hinten verlängerndes bzw. fortsetzendes Rohrelement.

Eine gattungsgemäße Beleuchtungseinrichtung ist aus der DE 20 2019 003 292 U1 bekannt. Der hierbei verwendete Frontscheinwerfer hat eine Vielzahl von LEDs, die im Frontbereich des Scheinwerfers angeordnet sind. Im Scheinwerfergehäuse sind ferner mehrere Sensoren angeordnet, die Licht des entgegenkommenden Verkehrs erfassen, und mindestens ein Mikrocontroller als Steuereinheit ist vorgesehen, um die Sensorsignale auszuwerten und gegebenenfalls einzelne LEDs anzusteuern, damit entgegenkommende Fahrzeuge nicht geblendet werden. Sensoren und LEDs können Einheiten bilden, und als Matrix entlang der Frontfläche verteilt angeordnet sein. Die Frontfläche kann insbesondere um eine vertikale Krümmungsakte gekrümmt sein.

Aufgabe der Erfindung ist es, die Funktionalitäten von Beleuchtungseinrichtungen und Scheinwerfern für einspurige Fahrzeuge wie Fahrräder und andere LEV's mit hoher Kurvenneigung in der Kurvenfahrt zu verbessern, und bei sturzsicherer Anbringungsmöglichkeiten für den Scheinwerfer auch eine gute Kurvenausleuchtung bei der Kurvenfahrt zu erreichen.

Zur Lösung dieser Aufgabe wird mit der Erfindung für eine Beleuchtungseinrichtung vorgeschlagen, dass im Gehäuse wenigstens eine LED als zentrale Leuchteinheit angeordnet ist, und jeweils wenigstens eine weitere LED als seitliche Leuchteinheit seitlich versetzt oder höhenversetzt zu der zentralen Leuchteinheit angeordnet ist, wobei mittels der Sensoreinrichtung und der Steuereinheit die Drehlage des Gabelschafts abtastbar und in Abhängigkeit von der Drehlage die zentrale Leuchteinheit und wenigstens eine der seitlichen Leuchteinheiten ansteuerbar ist. Eine erfindungsgemäße Beleuchtungseinrichtung hat mithin mindestens 3 separate Leuchteinheiten als Lichtquellen, die je nach zu erreichender gewünschter Funktion auch unterschiedlich zueinander ausgebildet sein können. Eine zentrale Leuchteinheit bildet im Regelfall das eigentliche Fahrlicht, wohingegen die beiden seitlichen Leuchteinheiten in Abhängigkeit von der Drehbewegung und Drehlage des Gabelschafts hinzugeschaltet werden, um auch bei Kurvenfahrten eine homogene Nahfeldausleuchtung zu ermöglichen. Falls bei einem Scheinwerfer nur 3 Leuchteinheiten vorhanden sind, könnten die beiden seitlichen Leuchteinheiten relativ zur zentralen Leuchteinheit jeweils um beispielsweise bis zu 45° nach außen versetzt angeordnet sein und/oder zumindest einen Abstrahlwinkel aufweisen, der um ein entsprechendes Maß von dem Abstrahlwinkel der zentralen Leuchteinheit abweicht. Die Abstrahlung der seitlichen Leuchteinheiten können von dem Abstrahlwinkel der zentralen Leuchteinheit abweichen, um durch eine geeignete Abstrahlcharakteristik auch bei stärkeren Schräglagen eine gute Ausleuchtung zu erreichen.

Insbesondere vorteilhaft ist, wenn weitere LEDs als zusätzliche seitliche Zwischen-Leuchteinheiten zwischen der zentralen Leuchteinheit und den seitlichen Leuchteinheiten vorgesehen sind, wobei mittels der Steuereinheit in Abhängigkeit von der Drehlage des Gabelschafts zusammen mit der zentralen Leuchteinheit oder einer der seitlichen Leuchteinheiten jeweils wenigstens eine Zwischen-Leuchteinheit ansteuerbar und anschaltbar ist. Im Prinzip kann die Beleuchtungseinrichtung um beliebig viele Leuchteinheiten erweitert werden, um je nach Winkeleinschlag eine abgestimmte Ausleuchtung zu erreichen.

Die zentrale Leuchteinheit, die seitlichen Leuchteinheiten und die Zwischen-Leuchteinheiten können Bestandteil eines Leuchtbandes sein, sie können aber auch eine Leuchtmatrix bilden und seitlich zueinander versetzt auch in unterschiedlichen Höhenpositionen bezogen auf die zentrale Leuchteinheit angeordnet sein. Es ist ferner möglich, sowohl die zentrale Leuchteinheit als auch die seitlichen Leuchteinheiten nicht horizontal versetzt, sondern in der Höhe versetzt übereinander anzuordnen, und dann nur den Abstrahlwinkel der höhenversetzt angeordneten seitlichen Leuchteinheiten entsprechend für die seitliche Ausleuchtung auszurichten.

Um eine gute Ausleuchtung und die gewünschte Abstrahlcharakteristik mit einem entsprechenden Abstrahlwinkel oder Lichtkegel zu erzielen, können entweder spezielle Leuchteinheiten verwendet werden, die bereits über das verwendete Leuchtmittel einen entsprechenden gerichteten Lichtkegel erzeugen, oder zumindest der zentralen Leuchteinheit, oder der zentralen Leuchteinheit und zumindest den beiden seitlichen Leuchteinheiten, oder der zentralen Leuchteinheit, den beiden seitlichen Leuchteinheiten und zumindest einer der Zwischen-Leuchteinheiten, oder sämtlichen Leuchteinheiten, ist eine Lichtoptik zur Erzeugung eines Lichtkegels mit angepasster Abstrahlcharakteristik zugeordnet. Gemäß einer Variante könnte die Lichtoptik Bestandteil der Frontfläche sein; alternativ oder zusätzlich könnte die Lichtoptik zumindest für einzelne Leuchteinheiten eine individuelle Optik sein, die keinen Bestandteil der Frontfläche bildet, sondern jeweils an der zugehörigen LED angeordnet ist. Entsprechende Lichtoptiken könnten auch nach Art eines Reflektors ausgebildet sein, der in Fahrtrichtung hinter der eigentlichen LED-Lichtquelle angeordnet ist; oder es kommen kombinierte Lichtoptiken zum Einsatz, die ein Element vor der Lichtquelle und einen Reflektor hinter der Lichtquelle verwenden.

Um die Drehbewegung des Gabelschafts und damit des Vorderrades zu erfassen, könnte gemäß einer Ausführungsvariante eine Sensoreinrichtung mit Sensor am oder im Gehäuse des Frontscheinwerfers angeordnet sein und zum Zusammenwirken mit wenigstens einem Geberelement ausgebildet sein, welches fest am Gabelschaft angeordnet ist. Es wäre aber auch möglich, dass Geberelement als Bestandteil einer im Steuerrohr angeordneten Steuersatzeinheit auszubilden.

In einfachster Ausgestaltung könnte das wenigstens eine Geberelement aus einem Magnetelement bestehen. Mit einem solchen Magnetelement lie-ßen sich aber nur eine begrenzte Anzahl von Leuchteinheiten ansteuern. In einer vorteilhafteren Ausgestaltung könnte daher das wenigstens eine Geberelement Bestandteil eines vorzugsweise optischen Sensorsystems oder Sensorabtastsystems sein, wobei vorzugsweise die Nulllage des Sensorsystems oder Sensorabtastsystems einstellbar ist. Mit einem optischen Sensor, der beispielsweise eine feingradige Abtastung einer Skala auf einem Ring oder dergleichen ermöglicht, kann die Steuereinheit relativ genau den Drehwinkel erfassen und entsprechend eine oder mehrere Leuchteinheiten ansteuern und andere abschalten. Grundsätzlich ließen sich zahlreiche bekannte Drehwinkelmesssysteme bei einer erfindungsgemäßen Beleuchtungseinrichtung als Sensoreinrichtung verwenden.

Die Ausgestaltung der Beleuchtungseinrichtung kann dergestalt erfolgen, dass wenigstens eine Sensoreinrichtung eine dem Gabelschaft zugeordnete Abtastoptik aufweist, deren Abtastsignal mittels der Steuereinheit in Ansteuersignale für die Leuchteinheiten umwandelbar ist.

Die Sensoreinrichtung kann aber auch unabhängig von einem Scheinwerfer ausgebildet sein und mithin keinen Bestandteil des Scheinwerfers bilden; für die Signalübertragung des mittels der Sensoreinrichtung abgetasteten Drehwinkels an die Steuereinheit könnte dann eine Kabelverbindung mittels Kabel oder auch eine drahtlose Verbindung beispielsweise über Bluetooth oder ein anderes kabelloses Verfahren eingesetzt werden.

In Abhängigkeit von dem Sensorsignal der Sensoreinrichtung kann die Ansteuerung der jeweiligen Leuchteinheit elektronisch erfolgen. Es kann auch ein Kondensator zum Einsatz kommen, um ein Nachleuchten bei sehr schnellen Lenkbewegungen zu realisieren und ein Flackern der Leuchteinheiten im Scheinwerfer zu vermeiden.

Die obige Aufgabe wird auch mit einem Scheinwerfer gelöst, der erfindungsgemäß dadurch gekennzeichnet ist, dass im Gehäuse wenigstens eine LED als zentrale Leuchteinheit angeordnet ist, und jeweils wenigstens eine weitere LED als seitliche Leuchteinheit seitlich oder in der Höhe versetzt zu der zentralen Leuchteinheit angeordnet ist. Bei übereinander angeordneten Leuchteinheiten weisen die seitlichen Leuchteinheiten einen entsprechend zur Seite gerichtete Abstrahlwinkel bzw. eine entsprechend zur Seite gerichtete Abstrahlcharakteristik auf.

Auch beim Scheinwerfer können weitere LEDs als zusätzliche seitliche Zwischen-Leuchteinheiten zwischen der zentralen Leuchteinheit und den seitlichen Leuchteinheiten angeordnet sein. Die zentrale Leuchteinheit, die seitlichen Leuchteinheiten und die Zwischen-Leuchteinheiten können Bestandteil eines Leuchtbandes sein oder eine Leuchtmatrix bilden.

Um eine vorteilhafte Ausleuchtung zu erreichen, können auch beim Scheinwerfer zumindest der zentralen Leuchteinheit, oder der zentralen Leuchteinheit und zumindest den beiden seitlichen Leuchteinheiten, oder der zentralen Leuchteinheit, den beiden seitlichen Leuchteinheiten und zumindest einer der Zwischen-Leuchteinheiten, oder gegebenenfalls sogar sämtlichen Leuchteinheiten, eine Lichtoptik zur Erzeugung eines Lichtkegels mit angepasster Abstrahlcharakteristik zugeordnet sein. Auch hier könnte die Lichtoptik Bestandteil der Frontfläche sein, und/oder die Lichtoptik könnte zumindest für einzelne Leuchteinheiten eine individuelle Optik sein, die keinen Bestandteil der Frontfläche bildet. Es können aber auch Leuchteinheiten mit Lichtquellen eingesetzt werden, die entsprechende Lichtkegel aus sich heraus erzeugen.

Gemäß einer vorteilhaften Ausgestaltung eines Scheinwerfers könnte wenigstens eine Sensoreinrichtung am oder im Gehäuse des Frontscheinwerfers angeordnet sein; die Sensoreinrichtung kann aber auch außerhalb des Gehäuses angeordnet sein, und der Schweinwerfer, bzw. die Steuerelektronik im Scheinwerfer ist per Kabel oder drahtlos mit der externen Sensoreinrichtung koppelbar oder gekoppelt.

Bei einer Ausgestaltung eines Scheinwerfers, bei welchem wenigstens eine Steuereinheit im Gehäuse des Scheinwerfers angeordnet ist, kann mittels der Steuereinheit, und/oder mittels eines einem, mehreren oder jedem der Leuchteinheiten zugeordneten Kondensators, ein aktives Ansteuern bzw. Einschalten von wenigstens 2 benachbart zueinander liegenden Leuchteinheiten erreichbar sein bzw. bewirkt werden, um die Kurvenausleuchtung während der Kurvenfahrt zu verbessern.

Ein erfindungsgemäßer Scheinwerfer könnte beispielsweise auf seiner Rückseite mit einem Sensorelement einer Sensoreinrichtung versehen sein, welche die Drehbewegung des Gabelschafts unmittelbar abtastet, beispielsweise anhand eines am Gabelschaft befestigten Magneten. In Abhängigkeit von der Drehstellung des Magneten werden dann einzelne Leuchteinheit hinzu- oder abgeschaltet, wobei das Zuschalten oder Abschalten eine Reaktion auf die Position des Magneten bzw. dessen Lage zum, vorzugsweise relativ zum Rahmen stationären, Sensorelement bildet. Sowohl bei einer Beleuchtungseinrichtung als auch einem Scheinwerfer können die zentrale Leuchteinheit und die seitlichen Leuchteinheiten zueinander verschiedene Abstrahlwinkel aufweisen oder Lichtkegel mit unterschiedlichen Abstrahlwinkeln erzeugen.

Ein erfindungsgemäßes Fahrzeug weist entsprechend eine Beleuchtungseinrichtung oder einen Scheinwerfer wie oben beschrieben auf. Bei den Fahrzeugen handelt es sich vorzugsweise um einspurige Fahrräder oder LEV's, die mit einem Fahrzeugrahmen mit Steuerrohr und mit einem innerhalb des Steuerrohrs drehbar gelagerten Gabelschaft zur Übertragung einer Lenkbewegung auf ein Vorderrad des Fahrzeugs versehen sind.

Gemäß einer Ausgestaltung des entsprechenden Fahrzeugs kann der Scheinwerfer der Beleuchtungseinrichtung mit einer Rückseite seines Gehäuses am Steuerrohr oder an einer steuerrohrseitigen Halterung befestigt sein. Gemäß einer alternativen Ausgestaltung kann das Steuerrohr des Fahrzeugrahmens eine Vorderfläche aufweisen, die mit einer Ausschnittsöffnung versehen ist, wobei der Scheinwerfer in die Ausschnittsöffnung im Steuerrohr eingesetzt ist, und vorzugsweise vollständig im Steuerrohr eingesetzt ist. Dies ergibt eine in den Fahrzeugrahmen integrierte Position für den Scheinwerfer, wodurch dieser besonders vorteilhaft gegenüber Beschädigungen bei Stürzen gesichert ist, und zugleich diebstahlsicher am Fahrzeugrahmen befestigt und verankert ist.

Bei einem Fahrzeug, bei welchem die Beleuchtungseinrichtung bzw. der Scheinwerfer ein Kurvenlicht bildet und damit auch bei Kurvenfahrten eine verbesserte Ausleuchtung bewirkt, ist besonders vorteilhaft, wenn die für Bremsen und Schaltungen verwendeten Züge am Steuerrohr integral geführt werden und/oder innen durch den Steuersatz zur drehbaren Lagerung des Gabelschafts geführt werden. Hierzu kann dieser Steuersatz in Ansicht bekannterweise spezielle Führungen für Kabelzüge oder Leitungen wie Bremszüge, Bremsleitungen oder Schaltzüge aufweisen. Beispielsweise kann der Steuersatz einen Konusring mit Durchgangsöffnungen umfassen, der in das obere Steuersatzlager eingelegt ist. Gemäß einer Ausführungsvariante kann der Steuersatz mit der Sensoreinrichtung gekoppelt sein. Alternativ oder zusätzlich könnte der Steuersatz ein Ringelement mit Führungen für Kabelzüge oder Leitungen aufweisen, wobei die Sensoreinrichtung zum Abtasten der Drehlage des Gabelschaft zumindest partiell Bestandteil des Ringelements ist oder mit diesem verbunden ist. Das Sensorelement kann aber auch am Gabelschaft festgeklemmt sein oder über eine Klebeverbindung am Gabelschaft befestigt sein oder mittels Markierungen unmittelbar am Gabelschaft angebracht sein.

Weitere Ausgestaltungen einer erfindungsgemäßen Beleuchtungseinrichtung bzw. eines erfindungsgemäßen Scheinwerfers sowie eines hiermit versehenen Fahrrades ergeben sich aus der nachfolgenden Beschreibung eines schematisch gezeigten Ausführungsbeispiels. Die Ausführungsbeispiele dienen nur zur Erläuterung der Erfindung, ohne die Erfindung hierauf zu beschränken.

In der Zeichnung zeigen:
- **Fig 1**: in perspektivischer Ansicht einen Teilausschnitt eines Fahrradrahmens mit Lenker, Gabelschaft und am Steuerrohr des Fahrradrahmens befestigtem erfindungsgemäßen Frontscheinwerfer gemäß einem 1. Ausführungsbeispiel;
- **Fig 2**: in perspektivischer Ansicht einen Teilausschnitt eines Fahrradrahmens mit am Steuerrohr des Fahrradrahmens befestigtem erfindungsgemäßen Frontscheinwerfer gemäß einem zweiten Ausführungsbeispiel;
- **Fig 3**: in perspektivischer Ansicht eine Detailansicht des Frontscheinwerfers beim Ausführungsbeispiel gemäß Figur 2;
- **Fig 4**: in perspektivischer schematischer Ansicht den Frontscheinwerfer aus Figur 2 zusammen mit einer ersten Ausführungsvariante einer Sensoreinrichtung zum Detektieren der Gabelschaft-Drehlage;
- **Fig 5**: in perspektivischer schematischer Ansicht den Frontscheinwerfer aus Figur 2 zusammen mit einer zweiten Ausführungsvariante einer Sensoreinrichtung zum Detektieren der Gabelschaft-Drehlage; und
- **Fig 6**: in perspektivische Ansicht einen Teilausschnitt eines Fahrradrahmens mit am Steuerrohr des Fahrradrahmens befestigtem erfindungsgemäßen Frontscheinwerfer gemäß einem dritten Ausführungsbeispiel.

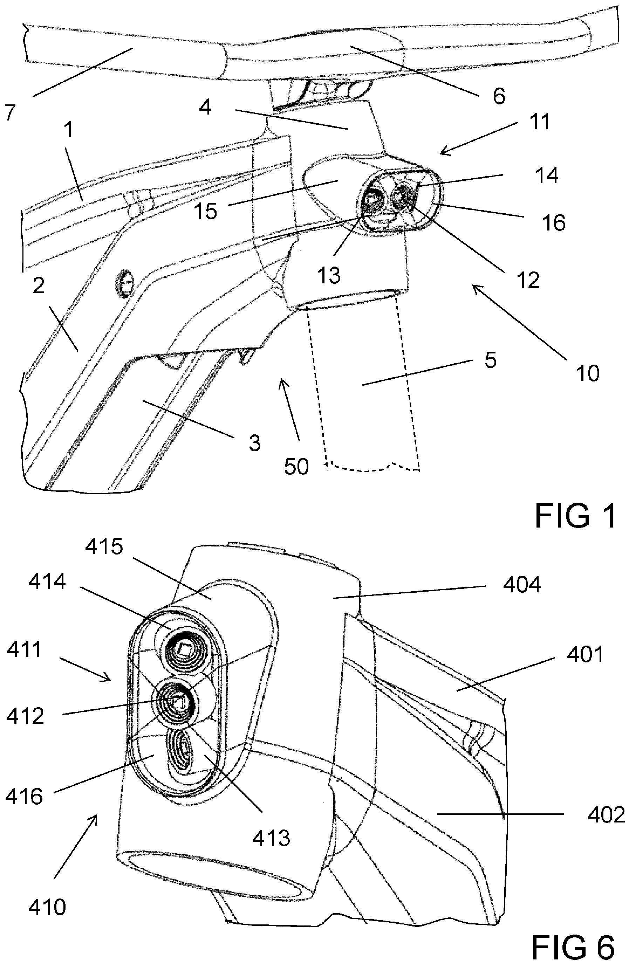

In Figur 1 ist insgesamt mit Bezugszeichen 50 ein Fahrradrahmen für ein Elektrofahrrad bezeichnet, wobei von dem Fahrradrahmen 50 hier nur ein Oberrohr 1, ein Unterrohr 2 mit einer Batterieaufnahme 3 zur im Unterrohr 2 integrierten Aufnahme einer Batterie (nicht dargestellt) und ein Oberrohr 1 und Unterrohr 2 miteinander verbindendes Steuerrohr 4 dargestellt sind. Bei einem Fahrradrahmen mit tiefem Einstieg kann das Oberrohr auch entfallen. Im Steuerrohr 4 wird mittels eines sogenannten Steuersatzes (nicht dargestellt) ein Gabelschaft 5 drehbar gelagert, der an seinem oberen Ende über einen Vorbau 6 mit einem Lenker 7 und an seinem unteren Ende direkt oder indirekt mit einem Vorderrad (nicht dargestellt) verbunden ist. Über eine Drehbewegung des Lenkers 7 wird das Vorderrad für Kurvenfahrten bewegt. Fahrradrahmen und deren Aufbau können unterschiedliche Gestaltungen haben, wie dem Fachmann bekannt, und es handelt sich hier nur um eine beispielhafte Ausführungsvariante, da es auf den Aufbau des Fahrradrahmens für die Erfindung tatsächlich nicht ankommt.

Die Erfindung betrifft vielmehr eine insgesamt mit Bezugszeichen 10 bezeichnete Beleuchtungseinrichtung, die einerseits einen Frontscheinwerfer 11 und andererseits eine in Figur 1 nicht dargestellte Sensoreinrichtung umfasst, mit der eine Lenkbewegung des Gabelschafts 5 abgetastet werden kann. Der Frontscheinwerfer 11 ist, wie aus der schematischen Ansicht in Figur 1 gut zu erkennen ist, mit hier drei nebeneinander angeordneten Leuchteinheiten 12, 13, 14 versehen, die hier jeweils aus einer LED mit integrierter Optik bestehen. Die mittlere Leuchteinheit 12 dient als Fahrlicht, und der über die Optik der Leuchteinheit 12 erzeugte Lichtkegel ist entsprechend nach vorne in Fahrtrichtung und auf den Boden gerichtet. Die drei Leuchteinheiten 12, 13, 14 sind in einem Gehäuse 15 angeordnet, welches frontseitig am Steuerrohr 4 auf im Einzelnen nicht dargestellte, beliebige Weise verankert bzw. befestigt ist. Das Gehäuse 15 ist frontseitig mittels einer transparenten Frontfläche 16 verschlossen, um die innerhalb des Gehäuses 15 angeordneten Leuchteinheiten 12, 13, 14 sowie sämtliche innerhalb des Gehäuses 15 angeordnete Elektronik vor Umwelteinflüssen wie insbesondere Feuchtigkeit und Spritzwasser, und auch gegen Schlageinwirkungen durch aufgeworfene oder herumfliegende Gegenstände, zu schützen.

Beispielsweise innerhalb des Gehäuses 15 kann zusätzlich zu den Leuchteinheiten 12, 13, 14 eine Steuereinheit (nicht dargestellt) zum Ansteuern der Leuchteinheiten in Abhängigkeit von dem Detektionssignal der Sensoreinrichtung zum Abtasten der Drehbewegung des Gabelschafts 5 angeordnet sein. In einfachster Ausgestaltung könnte die Sensoreinrichtung einen am Gabelschaft 5 im Bereich innerhalb des Steuerrohrs 4 auf Höhe des Frontscheinwerfers 11 positionierten Magneten aufweisen, der mittels einer an der Rückseite des Frontscheinwerfers 10 oder dessen Gehäuse befestigten geeigneten Abtasteinrichtung zusammenwirkt, um in Abhängigkeit von dem Drehwinkel entweder nur die Leuchteinheit 12 oder zusätzlich oder alternativ eine der seitlichen Leuchteinheiten 13 oder 14 einzuschalten. Es könnte zusätzlich auch ein Kondensator im Gehäuse 15 als Bestandteil der Steuereinheit ausgebildet sein, mit dem ein Nachleuchten der jeweiligen seitlichen Leuchteinheit realisiert wird. Durch die Nutzung von mehreren Leuchteinheiten und Abtasten des Einschlagwinkels des Lenkers 7 über den Gabelschaft 5 kann mit der Beleuchtungseinrichtung 10 eine Kurvenlicht-Funktion für ein mit dieser Beleuchtungseinrichtung 10 ausgestattetes Fahrrad realisiert werden.

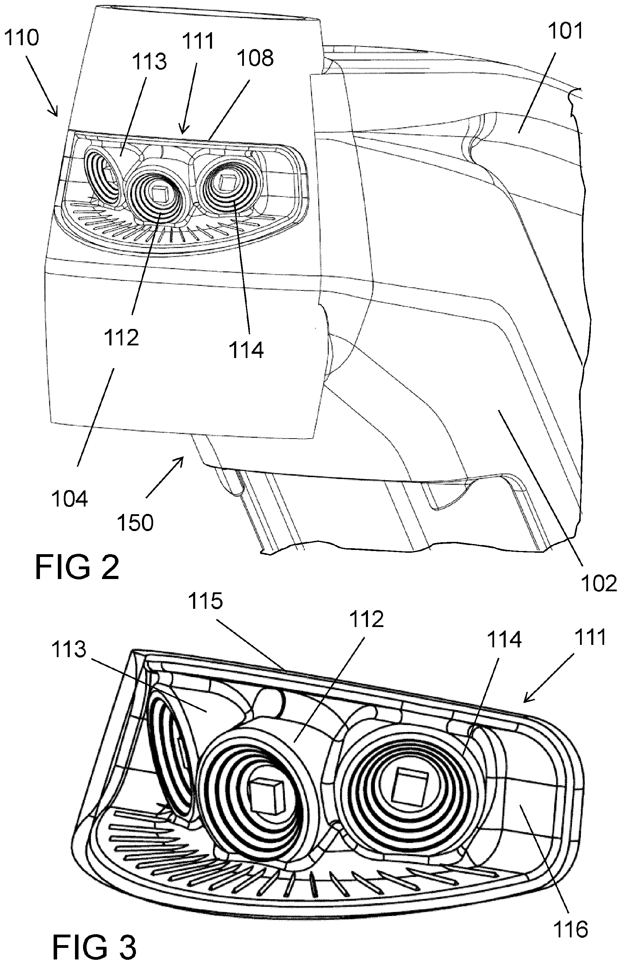

Die Figuren 2 und 3 zeigen ein zweites Ausführungsbeispiel für eine Beleuchtungseinrichtung 110. Funktionsgleiche Bauteile sind mit um 100 hören Bezugszeichen versehen. Auch hier sind vom Fahrradrahmen 150 nur das Unterrohr 102, das Oberrohr 101 und das Steuerrohr 104 dargestellt. Auch hier ist ein hier nicht dargestellter Gabelschaft drehbar im Steuerrohr 104 gelagert, dessen Drehbewegung wiederum durch eine ebenfalls nicht dargestellte Sensoreinrichtung abgetastet werden kann. Diese Sensoreinrichtung bildet einen Bestandteil der Beleuchtungseinrichtung 110 zusammen mit einem Frontscheinwerfer 111, welcher hier, abweichend vom vorherigen Ausführungsbeispiel, in einer Ausschnittsöffnung 108 im Steuerrohr 104 integriert aufgenommen ist. Auch der Frontscheinwerfer 111 weist wie beim vorherigen Ausführungsbeispiel drei Leuchteinheiten 112,113,114 auf, wobei die beiden Leuchteinheiten 113 und 114 jeweils seitlich versetzt zu einer der beiden Seiten der zentralen Leuchteinheit 112 angeordnet sind. Der Frontscheinwerfer 111 ist mit seinem Gehäuse 115 vollständig in der Ausschnittsöffnung 108 aufgenommen. Insbesondere Figur 3 lässt gut erkennen, dass die zentralen Leuchteinheit 112 einen Lichtkegel erzeugt, der in Fahrtrichtung nach vorne weist, wohingegen die in Fahrtrichtung betrachtet linke Leuchteinheit 114 einen Lichtkegel erzeugt, der nach links weist, und die in Fahrtrichtung rechte Leuchteinheit 113 einen Lichtkegel erzeugt, der in Fahrtrichtung nach rechts weist. Die drei Leuchteinheiten 112, 113, 114 sind verteilt entlang der hier glasklaren transparenten Frontfläche 116 angeordnet, die entsprechend der Krümmung des Steuerrohrs 104 ebenfalls gekrümmt ist. Die beiden seitlichen Leuchteinheiten 113,114 können daher in Fahrtrichtung betrachtet etwas weiter zurückliegend positioniert sein als die zentrale Leuchteinheit 112. Der Abstrahlwinkel der seitlichen Leuchteinheiten 113,114 kann von dem Abstrahlwinkel der zentralen Leuchteinheit 112 beispielsweise um bis zu 45° abweichen, wobei im Regelfall die Lichtkegel derart ausgebildet sind, dass sich die Lichtkegel teilweise überlappen. Jede von einer LED gebildete Leuchteinheit 112,113,114 ist mit einer integrierten Optik versehen, um für die jeweilige Funktion (Fahrlicht, Kurvenlicht) einen optimalen Lichtkegel zu erzeugen. Auch hier kann die Sensoreinrichtung (nicht dargestellt) Bestandteil des Gehäuses sein und mit einem Geber (nicht dargestellt) wie einem Magneten zusammenwirken, der am Gabelschaft (nicht dargestellt) befestigt oder in diesen integriert ist.

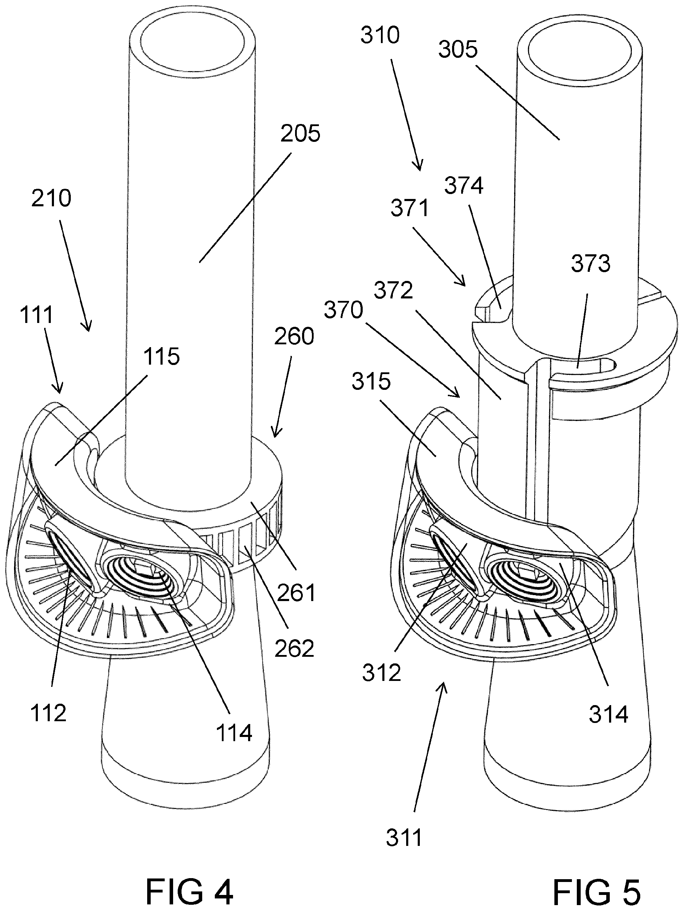

Figur 4 zeigt ein erstes, alternativ mögliches Ausführungsbeispiel für eine Beleuchtungseinrichtung 210 mit einer Sensoreinrichtung 260 zum Zusammenwirken mit dem Frontscheinwerfer 111 aus dem vorherigen Ausführungsbeispiel. Die Sensoreinrichtung 260 hat als gabelschaftseitigen Geber einen nur schematisch angedeuteten Sensorring 261, der mit wechselnden, in Taschen 262 angeordneten Magnetpolen oder mit Zähnen versehen ist und drehfest, der Rückseite des Gehäuses 115 des Scheinwerfers 111 gegenüberliegend am Gabelschaft 205 montiert ist. Mit einem an der Rückseite des Gehäuses 115 (oder im Gehäuse) montierten Sensor (nicht dargestellt) kann bei einer Drehbewegung des Gabelschafts 205 relativ zum feststehenden Steuerrohr (nicht dargestellt) und zum darin feststehend angeordneten Gehäuse 115 des Frontscheinwerfers der Drehwinkel abgetastet und an eine im Gehäuse 115 angeordnete Steuereinheit übertragen werden, die entsprechend dem abgetasteten Drehwinkel die zentrale Leuchteinheit 112 oder eine der beiden seitlichen Leuchteinheiten 114 einschaltet.

Figur 5 zeigt ein weiteres mögliches Ausführungsbeispiel für eine Beleuchtungseinrichtung 310 mit einer Sensoreinrichtung zum Zusammenwirken mit einem Frontscheinwerfer 311, der in seinem Aufbau und seiner Funktionsweise dem Frontscheinwerfer aus Figur 2 im Wesentlichen entspricht und wiederum im Gehäuse eine zentrale Leuchteinheit 312, eine in Fahrtrichtung betrachtete linke seitliche Leuchteinheit 314 und eine rechte, hier nicht zu erkennende seitliche Leuchteinheit aufweist. Das Steuerrohr ist zwar nicht dargestellt, hingegen zeigt Figur 5 einen am Gabelschaft 305 drehfest befestigten oberen Konusring 371 als Ringelement 370 mit einem unteren Fortsatz 372, wobei sich dieser Fortsatz 372 mindestens bis auf die Höhe der Rückseite des Gehäuses 315 des Frontscheinwerfers 311 erstreckt. Der Konusring 371 ist mit hier zwei schlitzartigen Kabeldurchführungen 373, 374 versehen, über welche Kabelzüge wie beispielsweise Bremszüge oder Leitungen intern durch den Steuersatz hindurchgeführt werden können, ohne dass sie in den Bereich der Lichtkegel der Leuchteinheiten 312, 314 geraten können. An dem Fortsatz 372, auf Höhe der Rückseite des Scheinwerfergehäuses 315, kann dann wiederum beispielsweise ein Magnet als Geber montiert sein, der mit einem im Scheinwerfergehäuse 315 angeordneten Sensor der Sensoreinrichtung zusammenwirkt, um über eine wiederum im Scheinwerfergehäuse 315 angeordnete Steuereinheit in Abhängigkeit von der Drehlage des Gabelschafts 305 die jeweiligen Leuchteinheit 312, 314 anzusteuern und ein- oder abzuschalten.

Figur 6 zeigt noch ein weiteres alternatives Ausführungsbeispiel für eine Beleuchtungseinrichtung 410. Auch hier ist von einem Fahrradrahmen nur ein Oberrohr 401, ein Unterrohr 402 sowie ein Steuerrohr 404 dargestellt. Am Steuerrohr 404 ist ein Frontscheinwerfer 411 der Beleuchtungseinrichtung 410 befestigt, beispielsweise ähnlich wie beim Ausführungsbeispiel nach Figur 1 außen aufgesetzt befestigt. Auch der Frontscheinwerfer 411 weist drei Leuchteinheiten 412,413,414 auf, von denen die mittlere Leuchteinheit 412 das Fahrlicht bildet und mit einer zugeordneten LED mit integrierter Leuchtoptik einen Lichtkegel erzeugt, der im Wesentlichen in Fahrtrichtung nach vorne und auf den Boden gerichtet ist. Eine der beiden weiteren Leuchteinheiten 413 ist unterhalb der zentralen Leuchteinheit 412 angeordnet und bildet eine seitliche Leuchteinheit mit einem seitlich nach rechts gerichteten Lichtkegel, und die weitere Leuchteinheit 414 ist oberhalb der zentralen Leuchteinheit 412 angeordnet und bildet eine seitliche Leuchteinheit mit einem in Fahrtrichtung betrachtet seitlich nach links gerichteten Lichtkegel. Über eine geeignete Sensoreinrichtung und eine mit dieser zusammenwirkenden Steuerelektronik beispielsweise im Gehäuse 415 des Scheinwerfers 411 kann wiederum erreicht werden, dass in Abhängigkeit von der Drehlage eines im Steuerrohr 404 gelagerten Gabelschafts eine der seitlichen Leuchteinheiten hinzugeschaltet wird, wenn ein entsprechender Drehwinkel des Gabelschafts in diese Richtung detektiert wird, um ein Kurvenlicht zu realisieren.

Für den Fachmann ergeben sich zahlreiche Ausführungsvarianten, die in den Schutzbereich der anhängenden Ansprüche fallen sollen. Die Ansprüche enthalten bereits eine Vielzahl unterschiedlicher Ausgestaltungen. Die Sensoreinrichtung kann auch Lasermarkierungen umfassen, die beispielsweise unmittelbar auf dem Gabelschaft angeordnet sind und mit einem geeigneten, über die Steuerelektronik angesteuerten Sensor der Sensoreinrichtung abgetastet werden. Sämtliche Ausführungsbeispiel zeigen nur drei Leuchteinheiten. Es ließen sich problemlos mehrere zusätzliche Leuchteinheiten im Gehäuse als Zwischen-Leuchteinheiten unterbringen. Der Frontscheinwerfer kann auch eine Matrix an Leuchteinheiten aufweisen. Die integrierte Kabeldurchführung kann auf verschiedenste Weisen erreicht werden, das Ausführungsbeispiel deutet nur schematisch eine Ausführungsvariante an. Die Beleuchtungseinrichtung kann auch an klassischen Fahrrädern eingesetzt werden und entsprechend mit Dynamos oder Narbendynamos zusammenwirken, über welche dann gegebenenfalls auch die Sensorik und die Steuereinheit elektrisch versorgt wird, sofern keine gesonderte Batterie zur Verfügung steht. Auch jede andere geeignete Sensorik zur Drehwinkelerfassung oder Drehwinkelmessung kann bei einer erfindungsgemäßen Beleuchtungseinrichtung zum Einsatz kommen. Sämtliche Ausführungsbeispiele zeigen ein Elektrofahrrad. Die Erfindung kann auch an anderen LEV'S mit Gabelschaft und Steuerrohr Verwendung finden. Die Sensorik kann auch zwischen Steuerrohr und Vorbau angeordnet sein und den Drehwinkel des Gabelschafts entsprechend zwischen diesen beiden Elementen erfassen. Insbesondere bei einer solchen Ausgestaltung könnten die Sensorsignale dann über Kabel oder kabellos an die Steuereinheit übertragen werden. Die Sensoreinrichtung kann insbesondere ein optisches Sensorabtastsystem bilden. Die Steuereinheit ist vorzugsweise im Gehäuse des Frontscheinwerfers angeordnet, kann aber auch ein separates Bauteil hierzu bilden.

## Patentansprüche

1. Beleuchtungseinrichtung für Fahrräder und andere LEV's die einen innerhalb eines Steuerrohrs drehbar gelagerten Gabelschaft (5) zur Übertragung einer Lenkbewegung auf ein Vorderrad, einen ein Gehäuse (15) mit, vorzugsweise zumindest partiell gekrümmter, Frontfläche (16) und mehrere entlang der Frontfläche verteilt angeordnete LED's aufweisenden Frontscheinwerfer (11) sowie wenigstens eine Sensoreinrichtung und eine Steuereinheit für die LEDS umfasst, **dadurch gekennzeichnet, dass** im Gehäuse wenigstens eine LED als zentrale Leuchteinheit (12) angeordnet ist, und jeweils wenigstens eine weitere LED als seitliche Leuchteinheit (13,14) seitlich versetzt und/oder höhenversetzt zu der zentralen Leuchteinheit (12) angeordnet ist, wobei mittels der Sensoreinrichtung und der Steuereinheit die Drehlage des Gabelschafts (5) abtastbar und in Abhängigkeit von der Drehlage die zentrale Leuchteinheit (12) und wenigstens eine der seitlichen Leuchteinheiten (13,14) ansteuerbar ist.

2. Beleuchtungseinrichtung nach Anspruch 1, **gekennzeichnet durch** weitere LEDs als zusätzliche seitliche Zwischen-Leuchteinheiten zwischen der zentralen Leuchteinheit und den seitlichen Leuchteinheiten, wobei mittels der Steuereinheit in Abhängigkeit von der Drehlage des Gabelschafts zusammen mit der zentralen Leuchteinheit oder einer der seitlichen Leuchteinheiten jeweils wenigstens eine Zwischen-Leuchteinheit ansteuerbar und anschaltbar ist.

3. Beleuchtungseinrichtung nach Anspruch 2, **dadurch gekennzeichnet, dass** die zentrale Leuchteinheit, die seitlichen Leuchteinheiten und die Zwischen-Leuchteinheiten Bestandteil eines Leuchtbandes oder einer Leuchtmatrix bilden.

4. Beleuchtungseinrichtung nach einem der vorhergehenden Ansprüche, **dadurch gekennzeichnet, dass** zumindest der zentralen Leuchteinheit, oder der zentralen Leuchteinheit und zumindest den beiden seitlichen Leuchteinheiten, oder der zentralen Leuchteinheit, den beiden seitlichen Leuchteinheiten und zumindest einer der Zwischen-Leuchteinheiten, oder sämtlichen Leuchteinheiten, eine Lichtoptik zur Erzeugung eines Lichtkegels mit angepasster Abstrahlcharakteristik zugeordnet ist.

5. Beleuchtungseinrichtung nach Anspruch 4, **dadurch gekennzeichnet, dass** die Lichtoptik Bestandteil der Frontfläche ist, und/oder dass die Lichtoptik zumindest für einzelne Leuchteinheiten eine individuelle Optik ist, die keinen Bestandteil der Frontfläche bildet.

6. Beleuchtungseinrichtung nach einem der vorhergehenden Ansprüche, **dadurch gekennzeichnet, dass** wenigstens eine Sensoreinrichtung am oder im Gehäuse (15) des Frontscheinwerfers (11) angeordnet ist und zum Zusammenwirken mit wenigstens einem Geberelement ausgebildet ist, welches fest am Gabelschaft (5) angeordnet ist oder einen Bestandteil einer im Steuerrohr angeordneten Steuersatzeinheit bildet.

7. Beleuchtungseinrichtung nach Anspruch 6, **gekennzeichnet durch, dass** das wenigstens eine Geberelement aus einem Magnetelement besteht, oder **dass** das wenigstens eine Geberelement Bestandteil eines vorzugsweise optischen Sensorsystems oder Sensorabtastsystems ist, wobei weiter vorzugsweise die Nulllage des Sensorsystems oder Sensorabtastsystems einstellbar ist.

8. Beleuchtungseinrichtung nach einem der Ansprüche 1 bis 6, **dadurch gekennzeichnet, dass** wenigstens eine Sensoreinrichtung eine dem Gabelschaft zugeordnete Abtastoptik aufweist, deren Abtastsignal mittels der Steuereinheit in Ansteuersignale für die Leuchteinheiten unwandelbar ist.

9. Beleuchtungseinrichtung nach einem der Ansprüche 1 bis 5, oder nach Anspruch 8, **gekennzeichnet durch, dass** die Sensoreinrichtung keinen Bestandteil des Scheinwerfers bildet und die Signalübertragung an die Steuereinheit mittels Kabel oder drahtlos durchführbar ist.

10. Scheinwerfer für eine Beleuchtungseinrichtung nach einem der Ansprüche 1 bis 9, mit einem Gehäuse, mit einer lichtdurchlässigen Frontfläche, die vorzugsweise zumindest partiell gekrümmt ist, und mit mehreren entlang der Frontfläche verteilt angeordnete LEDs als Leuchtmittel, **dadurch gekennzeichnet, dass** im Gehäuse wenigstens eine LED als zentrale Leuchteinheit angeordnet ist, und jeweils wenigstens eine weitere LED als seitliche Leuchteinheit seitlich versetzt oder höhenversetzt zu der zentralen Leuchteinheit angeordnet ist, wobei vorzugsweise weitere LEDs als zusätzliche seitliche Zwischen-Leuchteinheiten zwischen der zentralen Leuchteinheit und den seitlichen Leuchteinheiten angeordnet sind, wobei weiter vorzugsweise die zentrale Leuchteinheit, die seitlichen Leuchteinheiten und die Zwischen-Leuchteinheiten einen Bestandteil eines Leuchtbandes oder einer Leuchtmatrix bilden.

11. Scheinwerfer nach Anspruch 10, **dadurch gekennzeichnet, dass** zumindest der zentralen Leuchteinheit, oder der zentralen Leuchteinheit und zumindest den beiden seitlichen Leuchteinheiten, oder der zentralen Leuchteinheit, den beiden seitlichen Leuchteinheiten und zumindest einer der Zwischen-Leuchteinheiten, oder sämtlichen Leuchteinheiten, eine Lichtoptik zur Erzeugung eines Lichtkegels mit angepasster Abstrahlcharakteristik zugeordnet ist, wobei vorzugsweise die Lichtoptik Bestandteil der Frontfläche ist, und/oder wobei vorzugsweise die Lichtoptik zumindest für einzelne Leuchteinheiten eine individuelle Optik ist, die keinen Bestandteil der Frontfläche bildet.

12. Scheinwerfer nach Anspruch 10 oder 11, **dadurch gekennzeichnet, dass** wenigstens eine Sensoreinrichtung am oder im Gehäuse des Frontscheinwerfers angeordnet, oder dass der Schweinwerfer per Kabel oder drahtlos mit einer externen Sensoreinrichtung koppelbar ist, und/oder **dass** wenigstens eine Steuereinheit im Gehäuse des Scheinwerfers angeordnet ist und mittels der Steuereinheit und/oder mittels eines einem, mehreren oder jedem der Leuchteinheiten zugeordneten Kondensators ein aktives Ansteuern bzw. Einschalten von wenigstens 2 benachbarte zueinander liegenden Leuchteinheiten erreichbar ist.

13. Beleuchtungseinrichtung oder Scheinwerfer nach einem der vorhergehenden Ansprüche, **dadurch gekennzeichnet, dass** die zentrale Leuchteinheit und die seitlichen Leuchteinheiten zueinander verschiedene Abstrahlwinkel aufweisen oder Lichtkegel mit unterschiedlichen Abstrahlwinkeln erzeugen.

14. Fahrzeug, insbesondere Fahrrad oder LEV, mit einem Fahrzeugrahmen mit Steuerrohr (4) und mit einem innerhalb des Steuerrohrs drehbar gelagerten Gabelschaft (5) zur Übertragung einer Lenkbewegung auf ein Vorderrad, **dadurch gekennzeichnet, dass** das Fahrzeug mit einer Beleuchtungseinrichtung nach einem der Ansprüche 1 bis 10 und/oder mit einem Scheinwerfer nach einem der Ansprüche 11 bis 18 ausgestattet ist, wobei vorzugsweise der Scheinwerfer der Beleuchtungseinrichtung mit einer Rückseite seines Gehäuses am Steuerrohr oder an einer steuerrohrseitigen Halterung befestigt ist, **oder** wobei vorzugsweise das Steuerrohr (104) eine Vorderfläche aufweist, die mit einer Ausschnittsöffnung (108) versehen ist, wobei der Scheinwerfer in diese Ausschnittsöffnung (108) im Steuerrohr eingesetzt ist, und vorzugsweise vollständig im Steuerrohr eingesetzt ist.

15. Fahrzeug nach Anspruch 14, **dadurch gekennzeichnet, dass** am Steuerrohr oder an einem Steuersatz zur Lagerung des Gabelschaftes Führungen für Kabelzüge oder Leitungen wie Bremszüge, Bremsleitungen oder Schaltzüge ausgebildet sind, wobei vorzugsweise der Steuersatz ein Ringelement (371) mit Führungen für Kabelzüge oder Leitungen aufweist, wobei die Sensoreinrichtung zum Abtasten der Drehlage des Gabelschaft zumindest partiell Bestandteil des Ringelements ist oder mit diesem verbunden ist.
